# EUROPEAN PATENT SPECIFICATION

(11) **EP 2 111 754 B1**
(45) Date of publication and mention of the grant of the patent: **20.06.2012**
(21) Application number: 09003560.1
(22) Date of filing: 11.03.2009
(51) Int. Cl.: A01K 89/027

(54) **Fishing spinning reel**
Angelrolle
Moulinet de pêche

(30) Priority: 25.04.2008 JP 2008114969; 25.04.2008 JP 2008114970
(43) Date of publication of application: 28.10.2009
(73) Proprietor: Globeride, Inc., Higashi Kurume Tokyo (JP)
(72) Inventor: Shimizu, Yoshihito, Higashikurume-shi Tokyo (JP)
(74) Representative: Grünecker, Kinkeldey, Stockmair & Schwanhäusser

(56) References cited:
- EP-A1- 1 097 636
- EP-A2- 1 961 298

## Description

### BACKGROUND OF THE INVENTION

The present invention relates to a fishing spinning reel equipped with a switch mechanism for switching between a restricting state for restricting the rotation of a spool and a spool free state and a return mechanism for returning the switch mechanism in the spool free state to the restricting state in interlocked relation to the rotation of a handle. The intermediate application EP 1 961 298 A2 discloses a fishing spinning real comprising a drive gear, a pinion gear, an oscillation mechanism, a switch mechanism and a return mechanism including a return gear solidary with the drive gear for returning the switch mechanism to a restricting state by the operation of the handle.

Fishing spinning reels are known which are equipped with a switch mechanism disposed in a reel body to switch a drag mechanism for imparting rotational resistance to a spool between a drag operating state (a restricting state in which the rotation of the spool is restricted) and a nonoperating state (a spool free state: includes a state in which the spool is completely free and a state in which a drag force is applied by a sub-drag mechanism).

Generally, such a fishing spinning reel is provided with a return mechanism for automatically returning to the drag operating state by rotating a handle to wind when the aforementioned switch mechanism is in the nonoperating state. For example, JP-A-2000-83527 discloses a return mechanism whereby the switch mechanism in the nonoperating state is returned to the drag operating state by the winding operation of the handle by using a cam formed integrally at an end portion on a reel body side of a drive shaft which has a face gear and to which the handle is coupled.

The above-described known fishing spinning reel adopts a worm shaft system as an oscillation mechanism for converting the rotary motion of the handle into the back-and-forth reciprocating motion of the spool. This worm shaft is installed in a front-back portion within a gear box on the lower side of the drive shaft to which the handle is fitted, so that the reel body becomes disadvantageously large in size.

In this case, even if an attempt is made to adopt as the means for reciprocating the spool an oscillation gear system (a system in which a gear provided on the drive shaft is meshed with an oscillation gear engaged with a slider which moves back and forth integrally with a spool shaft, so as to convert the rotation of the handle into back-and-forth motion of the spool) which is capable of downsizing the reel body, a cam for actuating the return mechanism is provided integrally on an end portion of the drive shaft, so that the reel body cannot be made compact in size. Namely, even if an attempt is made to mount an idle gear of the oscillation gear system on the drive shaft, since the cam is disposed, the reel body becomes disadvantageously large in size in the direction of the drive shaft (becomes thick in the axial direction).

### SUMMARY OF THE INVENTION

The invention has been devised in view of the above-described problems, and its object is to provide a fishing spinning reel which includes a switch mechanism for switching the spool between the restricting state and the free state and a return mechanism for returning the spool from the free state to the restricting.state, and which is capable of attaining the downsizing of the reel body.

In order to achieve the object, the present invention provides a fishing reel in accordance with claim 1 as well as a fishing reel in accordance with claim 4:

In the fishing spinning reel constructed as described above, the return gear for actuating the return mechanism and the oscillation gear for constituting the oscillation mechanism are respectively meshed with the first gear and the second gear which are provided integrally rotatably on the drive shaft to which the handle is fitted. Further, the meshing portion of the return gear is disposed on the drive gear side relative to the spool shaft which is inserted in the pinion gear, while the meshing portion of the oscillation gear is disposed on the opposite side to the drive gear relative to the spool shaft. Therefore, it is possible to make effective use of the space within the reel body, thereby making it possible to downsize the reel body.

According to the invention, it becomes possible to downsize the reel body of the fishing spinning reel including the switch mechanism for switching the spool between the restricting state and the free state and the return mechanism for returning the spool from the free state to the restricting state.

### BRIEF DESCRIPTION OF THE DRAWINGS

Fig. 1 is a diagram illustrating an internal construction of a fishing spinning reel in accordance with a first embodiment of the invention and showing a spool restricting state (switch lever ON);
Fig. 2 is a diagram illustrating a spool free state (switch lever OFF);
Fig. 3 is a cross-sectional view taken along line A - A in Fig. 1;
Fig. 4 is a cross-sectional view taken along line B - B in Fig. 2;
Fig. 5 is a cross-sectional view taken along line C - C in Fig. 1;
Fig. 6 is a cross-sectional view according to a second embodiment, corresponding to Fig. 4; and
Fig. 7 is a cross-sectional view according to the second embodiment, corresponding to Fig. 5.

### DETAILED DESCRIPTION OF PREFERRED EMBODIMENTS

Referring now to the accompanying drawings, a detailed description will be given of an embodiment of the fishing spinning reel in accordance with the invention.

### First Embodiment

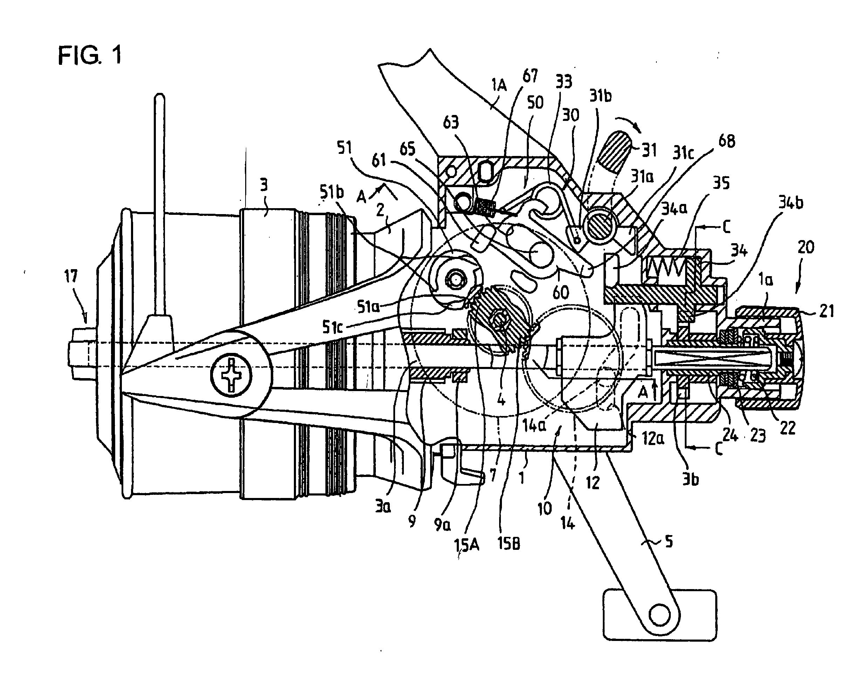

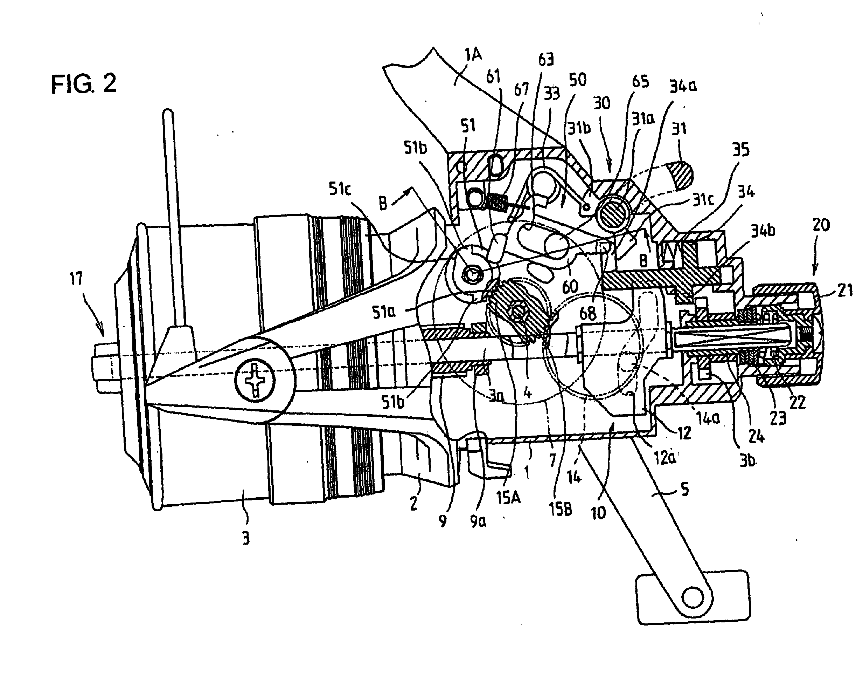

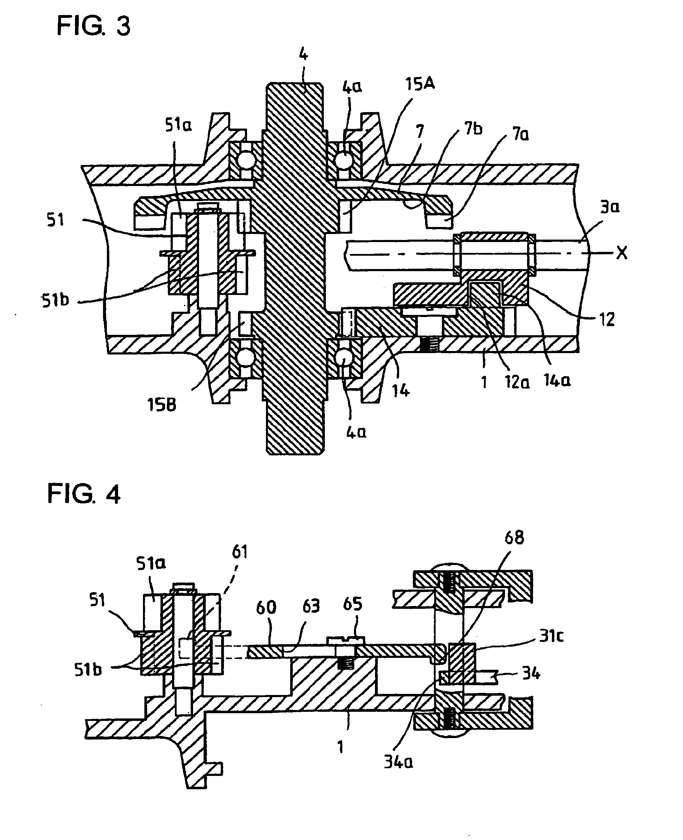

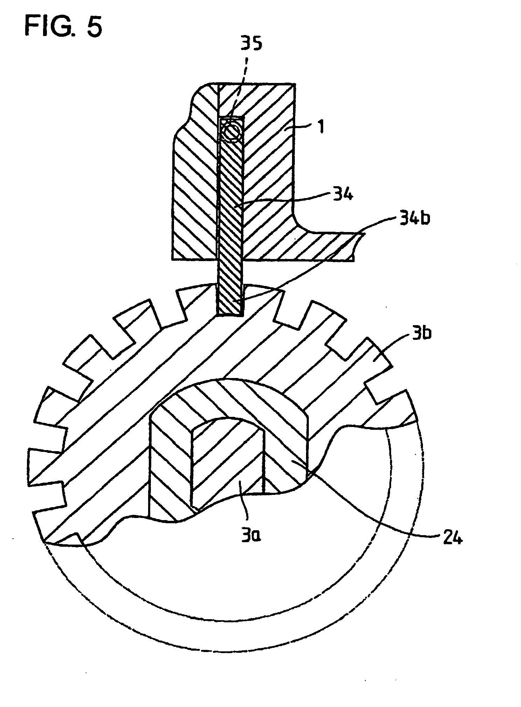

Figs. 1 to 5 are diagrams illustrating the fishing spinning reel according to a first embodiment of the invention. Fig. 1 is a diagram illustrating a spool restricting state (switch lever ON) ; Fig. 2 is a diagram illustrating a spool free state (switch lever OFF) ; Fig. 3 is a cross-sectional view taken along line A - A in Fig. 1; Fig. 4 is a cross-sectional view taken along line B - B in Fig. 2; and Fig. 5 is a cross-sectional view taken along line C - C in Fig. 1.

A reel leg 1A which is mounted on a fishing rod is integrally formed on a reel body 1 of a fishing spinning reel 1. A rotor 2, which has a line guide portion (not shown) and is rotatably supported, and a spool 3, which is supported movably back and forth in synchronism with the rotary motion of the rotor 2 and around which a fishing line is wound, are disposed in front of the reel leg 1A.

A handle shaft (drive shaft) 4 is rotatably supported in the reel body 1 by means of a pair of bearings 4a, and a handle 5 is attached to its projecting end portion. Further, a winding driving mechanism is engaged with the handle shaft 4, and this winding driving mechanism has a drive gear (face gear) 7 mounted on the handle shaft 4 and having internal teeth (toothed portion 7a) formed thereon, as well as a pinion gear 9 which meshes with this drive gear 7, extends in a perpendicular direction to the handle shaft 4, and has formed therein a hollow portion extending in the axial direction. In this case, the construction provided is such that a recess 7b is formed on the radially inner side of the toothed portion 7a of the drive gear 7, and a portion of a toothed portion of a first gear 15A, which will be described later, is disposed in this recess 7b so as to mesh with a return gear 51.

The pinion gear 9 is rotatably supported in the reel body 1 by means of a pair of bearings 9a, and is coupled to the rotor 2 so as to integrally rotate therewith. Further, a spool shaft 3a, which extends in the perpendicular direction to the handle shaft 4 and has the spool 3 fitted to its distal end side, is inserted in that hollow portion so as to be axially movable. This spool shaft 3a is adapted to be reciprocated back and forth by a below-described oscillation mechanism 10 when the handle 5 is rotationally driven.

The first gear 15A and a second gear 15B are coaxially provided on the aforementioned handle shaft 4 so as to be integrally rotatable. In this embodiment, the first gear 15A and the second gear 15B are respectively individually formed integrally on the handle shaft 4, and are formed by being distributed to the drive gear 7 side and the reel body 1 side with respect to the spool shaft 3a (its axis X), as shown in Fig. 3. It should be noted that the first gear 15A and the second gear 15B may be formed integrally on the handle shaft 4 without being separated, in which case it suffices if the toothed portion is distributed with respect to the axis X.

In this embodiment, as shown in Fig. 3, a portion of the toothed portion of the aforementioned first gear 15A is disposed in the recess 7b formed on the radially inner side of the toothed portion 7a of the drive gear 7. Further, the return gear 71, which will be described later, is also disposed in that recess 7b and is meshed with the first gear 15A. In addition, an oscillation gear 14 of the oscillation mechanism, which will be described later, is meshed with the aforementioned second gear 15B. For this reason, the arrangement provided is such that the meshing portion of the return gear 51 is located on the drive gear 7 side relative to the spool shaft 3a which is inserted in the pinion gear 9, while the meshing portion of the oscillation gear 14 is located on the opposite side to the drive gear 7 relative to the spool shaft 3a.

The aforementioned oscillation mechanism 10 is constructed by an oscillation gear system and includes a slider 12 which is mounted on a rear end portion of the spool shaft 3a and in which a guide groove 12 is formed, as well as an oscillation gear (interlocking gear) 14 provided with an eccentric projection 14a which is engaged in that guide groove 12a.

This oscillation gear 14 is meshed with the aforementioned second gear 15B. If the handle 5 is rotationally operated, the oscillation gear 14 is rotationally driven by means of the second gear 15B, and the slider 12 (the spool shaft 3a with the spool 3 fitted thereon) is reciprocated back and forth by the engaging relationship between the guide groove 12a and the eccentric projection 14a provided on the oscillation gear 14.

By virtue of the above-described construction, if the winding operation of the handle 5 is performed, the rotor 2 is rotationally driven by means of the drive gear 7 and the pinion gear 9. At the same time, the spool 3 is reciprocated in the back-and-forth direction by means of the aforementioned oscillation mechanism 10, and the fishing line is uniformly wound around the spool 3 by means of the line guide portion of the rotating rotor 2.

An unillustrated known drag mechanism (front drag mechanism) 17 for imparting a braking force to the rotation of the spool is mounted between the spool 3 and the spool shaft 3a. Further, a sub-drag mechanism 20 is mounted on the rear end side of the spool shaft 3a, so that when the spool 3 is set in a free state (a state in which the spool shaft 3a freely rotates) by a switch mechanism which will be described later, a braking force (drag force) can be imparted to the spool shaft 3a in an auxiliary manner.

Specifically, the sub-drag mechanism 20 includes an adjustment screw 21 which is rotationally operated with respect to a cylindrical portion 1a formed projectingly on the rear end portion of the reel body 1, as well as a braking member 23 whereby a predetermined braking force can be imparted by means of a pressing spring 22 by its axial movement accompanying the rotational operation of the adjustment screw 21. A collar 24, in which a noncircular portion of a rear portion of the spool shaft 3a is passed in a state of being rotationally locked and fitted so as to be axially movable, is disposed on the rear end side of the spool shaft 3a. The braking member 23 applies a braking force between the reel body 1 and the collar 24, such that even when the spool shaft 3a is set in a freely rotatable state by the switch mechanism, a braking force can be applied to the rotation of the spool 3 in an auxiliary manner by rotationally operating the adjustment screw 21.

A switch mechanism 30 for switching between a restricting state for restricting the rotation of the spool 3 and a free state for setting the spool free and the return mechanism 50 for returning the switch mechanism 30 in the spool free state to the restricting state by the winding operation of the handle 5. These mechanisms will be described hereinafter.

It should be noted that the phrase "restricting state of the spool" in the embodiment means a state in which a desired drag force is applied between the spool shaft 3a and the drag mechanism 17 to prevent the rotation of the spool shalt 3a or a spool lock state, and the phrase "spool free state" means a state in which the spool shaft 3a is allowed to rotate freely. Accordingly, the spool free state includes a state in which small rotational resistance is applied to the spool by the sub-drag mechanism 20.

The switch mechanism 30 includes a switch lever (operation member) 31 projecting from the reel body 1 to the outside and capable of being pivotally operated as well as a stopper member 34 disposed in the reel body 1 and adapted to be slidingly driven along the direction of the spool axis in conjunction with the rotational operation of the switch lever 31.

The switch lever 31 is pivotally supported on the reel body 1 about a pivot shaft 31a, and a restricting piece 31b and an abutment piece 31c are formed on a supporting portion of the switch lever 31.

A distributing and holding spring 33 which is mounted between the restricting piece 31b and the reel body 1 is connected to the restricting piece 31b so as to hold the switch lever 31 in a distributed manner between the state (switch lever ON) shown in Fig. 1 and the spool free state (switch lever OFF) shown in Fig. 2. In this case, the restricting piece 31b in the state shown in Fig. 1 is adapted to abut against a kick late which will be described later to restrict the rotation of the kick plate, whereas in the state shown in Fig. 2 the restricting piece 31b is adapted to cancel that restriction and abut against the inner surface of the reel body 1.

In addition, when the switch lever 31 is pivoted, the abutment piece 31c is adapted to abut against an abutment portion 34a formed on a front end portion of the stopper member 34 and to be kicked by a kick piece 68 formed on a kick plate 60 which will be described later.

The stopper member 34 is rotationally locked and supported by the reel body 1 so as to be movable along the direction of the spool axis, and is constantly urged toward the rear side by an urging spring disposed between the stopper member 34 and the reel body 1. It should be noted that an engaging/disengaging portion 34b, which is engaged with or disengaged from a ratchet 3b which is rotationally locked and fixed to the spool shaft 3a, is formed on the rear end side of the stopper member 34. In a state in which the stopper member 34 is urged toward the rear side by the urging force of the urging spring 35, the engaging/disengaging portion 34b is engaged with the ratchet 3b to rotationally lock the spool shaft 3a.

In addition, the abutment portion 34a is formed on a front end portion of the stopper member 34, such that when the switch lever 31 is pivotally operated from the ON state shown in Fig. 1 to the OFF state shown in Fig. 2, the aforementioned abutment piece 31c abuts against the abutment portion 34a to move the stopper member 34 to the front side against the urging force of the urging spring 35. In this case, when the stopper member 34 is moved to the front side, the aforementioned engaging/disengaging portion 34b is disengaged from the ratchet 3b to set the spool shaft 3a in a freely rotatable state (see Fig. 2).

Then, the switch mechanism 30 switched to the spool free state is returned from the state shown in Fig. 2 to the state shown in Fig. 1 by the return mechanism 50. The construction of this return mechanism 50 will be described hereinafter.

The return mechanism 50 includes the gear (return gear) 51 meshing with the first gear 15A provided integrally with the handle shaft 4 and the kick plate 60 which is driven in conjunction with the rotational driving of this return gear 51.

In this case, the return gear 51 is meshed with the first gear 15A on the substantially opposite side to the oscillation gear 14 meshing with the aforementioned second gear 15B, and allows the rotational driving force of the handle 4 to be effectively transmitted to the return gear 51 and the oscillation gear 14. In addition, a toothed portion 51a of the return gear 51 is disposed so as to mesh with the first gear 15A within the recess 7b of the drive gear 7, as described above.

The return gear 51 is rotatably supported by the reel body 1, and two cams 51b are integrally formed coaxially therewith adjacent to the toothed portion 51a. In this case, the two cams 51b are formed at an interval of approximately 180° along the rotating direction, as shown in Figs. 1 and 2. When the return gear 51 has rotated in the clockwise direction in the state shown in Fig. 2, one can 51b capable of abutting against an abutment portion 61 formed at one end portion of the kick plate 60.

An elongated hole 63 is formed in the kick plate 60, and a pin 65 fixed to the reel body 1 is engaged in this elongated hole 63. Further, a tension spring 67 is disposed on the kick plate 60 so as to be stretched between the kick plate 60 and the reel body 1, so that the kick plate 60 is in a state of being constantly urged in the counterclockwise direction about the pin 65. In this case, in the ON state shown in Fig. 1, the rotation of the kick plate 60 by the tension spring 67 is restricted by the restricting piece 31b of the aforementioned switch lever 31. Namely, although the kick plate 60 tends to rotate in the counterclockwise direction by the urging force of the tension spring 67, its rotation is restricted by the restricting piece 31b.

In addition, the kick piece 68 is formed on the other end portion of the kick plate 60 in a bent manner, and is adapted to kick the abutment piece 31c of the aforementioned switch lever 31 when the kick plate 60 is driven by the cam 51b.

A description will be given of the operation of the fishing spinning reel constructed as described above.

Initially, the switch mechanism 30 is in the ON state, as shown in Fig. 1. In this state, since the engaging/disengaging portion 34b of the stopper member 34 is engaged with the ratchet 3b, the spool shaft 3a is in a fixed state, and to the spool 3 is in a state in which a desired drag force is applied thereto by means of the front drag mechanism 17.

When the switch lever 31 is pivotally operated in the direction of the arrow from the state shown in Fig. 1, the abutment piece 31c is rotated clockwise about the pivot shaft 31a and abuts against the abutment portion 34a of the stopper member 34, thereby shifting the stopper member 34 toward the spool side against the urging force of the urging spring 35. At this time, as shown in Fig. 2, the engaging/disengaging portion 34b of the stopper member 34 is disengaged from the ratchet 3b, so that the spool shaft 3a (spool 3) is set in a freely rotatable state. It should be noted that this state is held by the distributing and holding spring 33.

Consequently, since the spool 3 is set in a completely free state, the fishing line can be paid out when a fish is caught. It should be noted that, in this state, as the adjustment screw 21 of the above-described sub-drag mechanism 20 is rotationally operated, it becomes possible to apply a drag force to the rotation of the spool 3 in an auxiliary manner.

In addition, the pivotal operation of the switch lever 31 in the direction of the arrow moves the restricting piece 31b away from the kick plate 60 to cancel its restriction, so that the kick plate 60 is rotated about the pin 65 in the counterclockwise direction by the tensile force of the tension spring 67. Consequently, as shown in Fig. 2, the abutment portion 61 formed at one end portion of the kick plate 60 enters the path of rotation of the cam 51b of the return gear 51.

It should be noted that if the rotor 2 is set in a reversely rotatable state in this state, the handle shaft 4 (gear 15) would rotate the clockwise direction in Fig. 2 such as when a fish has been caught. At this time, although the return gear 51 rotates in the counterclockwise direction, since a circular arc-shaped surface 51c formed on a periphery of the cam 51b is brought into sliding contact with the kick plate 60, no effect is exerted on the operation of the switch mechanism 30 and the return mechanism 50.

Further, in the state shown in Fig. 2, if the winding operation of the handle 5 is performed, the gear 15 rotates in the counterclockwise direction, so that the return gear 51 (cam 51b) rotates in the clockwise direction. In conjunction with this, the kick plate 60 is moved to the rear side by the cam 51b against the urging force of the tension spring 67 (is moved to the rear side through the engagement relationship between the elongated hole 63 and the pin 65), and the kick piece 68 formed at the other end thereof kicks the abutment piece 31c of the switch lever 31.

Consequently, the switch lever 31 is pivoted in the counterclockwise direction about the pivot shaft 31a, and is returned to and held in the state shown in Fig. 1 by the distributing and holding spring 33. In addition, since this pivoting of the switch lever 31 causes the abutment piece 31c to disengage from the abutment portion 34a of the stopper member 34, the stopper member 34 is shifted to the rear side by the urging force of the urging spring 35. As a result, the engaging/disengaging portion 34b of the stopper member 34 is engaged with the ratchet 3b and is thereby switched again to the restricting state in which the rotation of the spool 3 is restricted.

In the fishing spinning reel in the above-described construction, since the oscillation gear system is adopted as the mechanism for reciprocating the spool 3 back and forth, it becomes possible to downsize the reel body 1.

In addition, the return gear 51 for actuating the return mechanism 50 and the oscillation gear 144 for constituting the oscillation mechanism 10 are respectively meshed with the first gear 15A and the second gear 15B which are provided integrally rotatably on the handle shaft 4 to which the handle 5 is fitted. Further, the meshing portion of the return gear 51 is disposed on the drive gear 7 side relative to the spool shaft 3a which is inserted in the pinion gear 9, while the meshing portion of the oscillation gear 14 is disposed on the opposite side to the drive gear 7 relative to the spool shaft 3a. Therefore, it is possible to make effective use of the space within the reel body 1, thereby making it possible to render the reel body 1 compact and lightweight.

In particular, in this embodiment, since the first gear 15A is disposed in the recess 7b of the drive gear 7, and its meshing portion for meshing with the toothed portion 51a of the return gear 51 is disposed therein, the first gear 15A and the return gear 51 can be efficiently mounted in the limited space. Hence, it becomes possible to attaining a compact size (low profile) and light weight of the reel body 1 as practically as possible.

### Second Embodiment

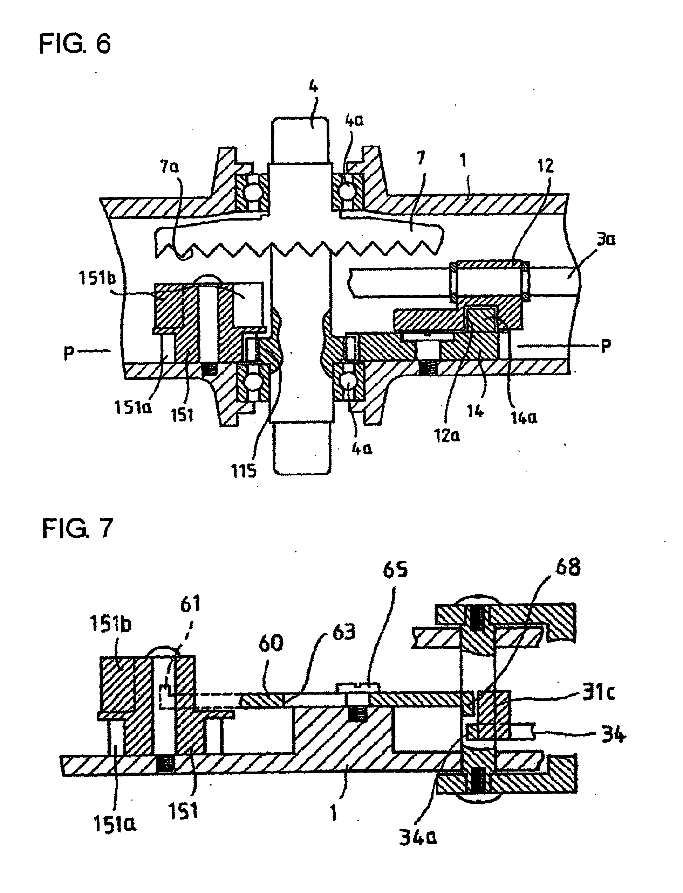

The fishing spinning reel according to a second embodiment of the invention will be described with reference to Figs. 6 and 7. In the second embodiment of the invention, those portions similar in construction to the corresponding portions of the first embodiment will be designated by identical reference numerals, respectively, and explanation thereof will be omitted.

In the second embodiment, one gear 115 is integrally rotatably provided on the handle shaft 4 at the reel body side (opposite to the drive gear side). The returning mechanism 50 includes a returning gear 151 having a toothed portion 151a meshing with the gear 115. The oscillation gear 14 of the oscillation mechanism 10 meshes with the gear 115. The oscillation gear 14, the gear 115 and the returning gear 151 are arranged on the same plane P as shown in Fig. 3.

In the same manner as the first embodiment, the return gear 151 is rotatably supported by the reel body 1, and two cams 151b are integrally formed coaxially therewith adjacent to the toothed portion 151a.

According to the second embodiment, as the oscillation gear 14 and the returning gear 151 mesh with the same gear 115, the structure can be simplified.

Although a description has been given above of the embodiments of the invention, the invention is not limited to the above-described embodiment, and various modifications are possible.

In a fishing spinning reel including the oscillation mechanism 10 of the gear oscillation system and the switch mechanism 30 for switching between the restricting state for restricting the rotation of the spool 3 and the free state for setting the spool free, the respective meshing portions of the return gear 51 for actuating the return mechanism 50 for automatically returning to the restricting state by the winding operation of the handle 5 and the oscillation gear 14 are respectively arranged in correspondence with the first gear 15A and the second gear 15B in a distributed manner with respect to the spool shaft 3a. The other arrangements may be modified, as required.

For example, the construction and operating direction of the stopper member 34, the relationships of mutual engagement, forms of arrangement, and the like of the switch lever 31, the stopper member 34, and the kick plate 60 may be modified, as required, without being restricted to the above-described embodiment. In addition, the first gear 15A and the second gear 15B provided on the handle shaft 4 may be provided on the handle shaft 4 as respectively separate members in an integrally rotatable manner.

## Claims

1. A fishing spinning reel (1) comprising:
a reel body (1);
a spool shaft (3a) axially movably supported in the reel body (1);
a spool (3) which is provided in front of the spool shaft (3a) and around which a fishing line is wound;
a rotor (2) which includes a line guide portion and rotates to guide and wind the fishing line around the spool (3) by the line guiding portion;
a drive shaft (4) rotatably supported by the reel body (1);
a handle (5) attached to the drive shaft (4);
a drive gear (7) disposed on the drive shaft (4);
a pinion gear (9) which meshes with the drive gear (7), through which the spool shaft (3a) passes and is integrally rotated with the rotor (2) so that the rotor (2) is rotated by rotating the handle (5);
an oscillation mechanism (10) which includes an oscillation gear (14) rotated in response to a rotation of the drive gear (7) and is adapted to convert a rotary motion of the handle (5) into back-and-forth reciprocating motion of the spool shaft (3a);
a switch mechanism including an operation member (31) operable to switch the spool (3) between a restricting state for restricting the rotation of the spool (3) and a free state for setting the spool (3) free; and
a return mechanism (50) which includes a return gear (51) rotated in response to the rotation of the drive gear (7) for returning the switch mechanism in the spool (3) free state to the restricting state by the winding operation of the handle (5),
wherein
the return mechanism (50) includes a first gear (15A) and a second gear (15B) integrally rotatably provided on the drive shaft (4), and
the return gear (51) and the oscillation gear (14) meshes with the first and second gears (15A; 15B), respectively.

2. The fishing spinning reel according to claim 1, wherein
a meshing portion of the return gear (51) meshing with the first gear (15A) is disposed on a drive gear (7) side relative to the spool shaft (3a), and
a meshing portion of the oscillation gear (14) meshing with the second gear (15B) is disposed on an opposite side to the drive gear (7) relative to the spool shaft (3a).

3. The fishing spinning reel according to claim 2, wherein at least a portion of a toothed portion of the first gear meshing with the return gear (51) is disposed in a recess (7b) of the drive gear (7).

4. A fishing spinning reel (1) comprising:
a reel body (1);
a spool shaft (3a) axially movably supported in the reel body (1);
a spool (3) which is provided in front of the spool shaft (3a) and around which a fishing line is wound;
a rotor (2) which includes a line guide portion and rotates to guide and wind the fishing line around the spool (3) by the line guiding portion;
a drive shaft (4) rotatably supported by the reel body (1);
a handle (5) attached to the drive shaft (4);
a drive gear (7) disposed on the drive shaft (4);
a pinion gear (9) which meshes with the drive gear (7), through which the spool shaft (3a) passes and is integrally rotated with the rotor (2) so that the rotor (2) is rotated by rotating the handle (5);
an oscillation mechanism (10) which includes an oscillation gear (14) rotated in response to a rotation of the drive gear (7) and is adapted to convert a rotary motion of the handle (5) into back-and-forth reciprocating motion of the spool shaft (3a);
a switch mechanism including an operation member (31) operable to switch the spool (3) between a restricting state for restricting the rotation of the spool (3) and a free state for setting the spool (3) free; and
a return mechanism (50) which includes a return gear (151) rotated in response to the rotation of the drive gear (7) for returning the switch mechanism in the spool (3) free state to the restricting state by the winding operation of the handle (5),
**characterized in that**
the return mechanism (50) includes a gear (115) integrally rotatably provided on the drive shaft (4), and
the return gear (151) and the oscillation gear (14) meshes with the same gear (115).

## Patentansprüche

1. Angelrolle (1), die umfasst:
ein Rollengehäuse (1);
eine Spulenwelle (3a), die axial beweglich in dem Rollengehäuse (1) gelagert ist;
eine Spule (3), die vor der Spulenwelle (3a) vorhanden ist und auf die eine Angelschnur aufgewickelt ist;
einen Drehkörper (2), der einen Schnur-Führungsabschnitt enthält und sich dreht, um die Angel-Schnur mit dem Schnur-Führungsabschnitt zu führen und auf die Spule (3) aufzuwickeln;
eine Antriebswelle (4), die von dem Rollengehäuse (1) drehbar getragen wird;
einen Griff (5), der an der Antriebswelle (4) angebracht ist;
ein Antriebs-Rad (7), das an der Antriebswelle (4) angeordnet ist;
ein Ritzel (9), das mit dem Antriebs-Rad (7) in Eingriff ist, durch das die Spulenwelle (3a) hindurch tritt und integral mit dem Drehkörper (2) gedreht wird, so dass der Drehkörper (2) durch Drehen des Griffs (5) gedreht wird;
einen Oszillationsmechanismus (10), der ein Oszillations-Rad (14) enthält, das in Reaktion auf Drehung des Antriebs-Rades (7) gedreht wird, und der so eingerichtet ist, dass er eine Drehbewegung des Griffs (5) in eine Hin- und Her-Bewegung der Spulenwelle (3a) umwandelt;
einen Umschalt-Mechanismus, der ein Betätigungselement (31) enthält, das betätigt werden kann, um die Spule (3) zwischen einem Einschränk-Zustand, in dem die Drehung der Spule (3) eingeschränkt wird, und einem freien Zustand umzuschalten, in dem die Spule (3) freigegeben wird; und
einen Rückstell-Mechanismus (50), der ein Rückstell-Rad (51) enthält, das in Reaktion auf die Drehung des Antriebs-Rades (7) gedreht wird, um den Umschalt-Mechanismus durch die Wickel-Betätigung des Griffs (5) in dem freien Zustand der Spule (3) auf den Einschränk-Zustand zurückzustellen,
wobei
der Rückstell-Mechanismus (50) ein erstes Rad (15A) und ein zweites Rad (15B) enthält, die integral drehbar an der Antriebswelle (4) vorhanden sind, und
das Rückstell-Rad (51) und das Oszillations-Rad (14) mit dem ersten bzw. dem zweiten Rad (15A, 15B) in Eingriff sind.

2. Angelrolle nach Anspruch 1, wobei
ein Eingriffsabschnitt des Rückstell-Rades (51), der mit dem ersten Rad (15A) in Eingriff ist, relativ zu der Spulenwelle (3a) an einer Seite des Antriebs-Rades (7) angeordnet ist, und
ein Eingriffsabschnitt des Oszillations-Rades (14), der mit dem zweiten Rad (15B) in Eingriff ist, relativ zu der Spulenwelle (3a) an einer dem Antriebs-Rad (7) gegenüberliegenden Seite angeordnet ist.

3. Angelrolle nach Anspruch 2, wobei wenigstens ein Teil eines mit Zähnen versehenen Abschnitts des ersten Rades, der mit dem Rückstell-Rad (51) in Eingriff ist, in einer Vertiefung (7b) des Antriebs-Rades (7) angeordnet ist.

4. Angelrolle (1), die umfasst:
ein Rollengehäuse (1);
eine Spulenwelle (3a), die axial beweglich in dem Rollengehäuse (1) gelagert ist;
eine Spule (3), die vor der Spulenwelle (3a) vorhanden ist und auf die eine Angelschnur aufgewickelt ist;
einen Drehkörper (2), der einen Schnur-Führungsabschnitt enthält und sich dreht, um die Angel-Schnur mit dem Schnur-Führungsabschnitt zu führen und auf die Spule (3) aufzuwickeln;
eine Antriebswelle (4), die von dem Rollengehäuse (1) drehbar getragen wird;
einen Griff (5), der an der Antriebswelle (4) angebracht ist;
ein Antriebs-Rad (7), das an der Antriebswelle (4) angeordnet ist;
ein Ritzel (9), das mit dem Antriebs-Rad (7) in Eingriff ist, durch das die Spulenwelle (3a) hindurch tritt und integral mit dem Drehkörper (2) gedreht wird, so dass der Drehkörper (2) durch Drehen des Griffs (5) gedreht wird;
einen Oszillationsmechanismus (10), der ein Oszillations-Rad (14) enthält, das in Reaktion auf Drehung des Antriebs-Rades (7) gedreht wird und der so eingerichtet ist, dass er eine Drehbewegung des Griffs (5) in eine Hin- und Her-Bewegung der Spulenwelle (3a) umwandelt;
einen Umschalt-Mechanismus, der ein Betätigungselement (31) enthält, das betätigt werden kann, um die Spule (3) zwischen einem Einschränk-Zustand, in dem die Drehung der Spule (3) eingeschränkt wird, und einem freien Zustand umzuschalten, in dem die Spule (3) freigegeben wird; und
einen Rückstell-Mechanismus (50), der ein Rückstell-Rad (151) enthält, das in Reaktion auf die Drehung des Antriebs-Rades (7) gedreht wird, um den Umschalt-Mechanismus durch die Wickel-Betätigung des Griffs (5) in dem freien Zustand der Spule (3) auf den Einschränk-Zustand zurückzustellen,
**dadurch gekennzeichnet, dass**
der Rückstell-Mechanismus (50) ein Rad (115) enthält, das integral drehbar an der Antriebswelle (4) vorhanden ist, und
das Rückstell-Rad (151) und das Oszillations-Rad (14) mit dem gleichen Rad (115) in Eingriff sind.

## Revendications

1. Moulinet de pêche (1) comprenant :
un corps de moulinet (1) ;
un arbre de tambour (3a) supporté de façon mobile axialement dans le corps de moulinet (1) ;
un tambour (3) qui est disposé devant l'arbre de tambour (3a) et autour duquel une ligne de pêche est enroulée ;
un rotor (2) qui comprend une portion de guidage de ligne et tourne pour guider et enrouler la ligne de pêche autour du tambour (3) par la portion de guidage de ligne ;
un arbre d'entraînement (4) supporté de façon rotative par le corps de moulinet (1) ;
une poignée (5) fixée à l'arbre d'entraînement (4) ;
un engrenage d'entraînement (7) disposé sur l'arbre d'entraînement (4) ;
un engrenage à pignons (9) qui s'engrène avec l'engrenage d'entraînement (7), à travers lequel passe l'arbre de tambour (3a) et est solidaire en rotation du rotor (2) de sorte que le rotor (2) est mis en rotation en tournant la poignée (5) ;
un mécanisme d'oscillation (10) qui comprend un engrenage d'oscillation (14) mis en rotation en réponse à une rotation de l'engrenage d'entraînement (7) et est adapté pour convertir un mouvement de rotation de la poignée (5) en mouvement alternatif de va-et-vient de l'arbre de tambour (3a) ;
un mécanisme de commutation comprenant un organe d'actionnement (31) actionnable pour commuter le tambour (3) entre un état de restriction permettant de restreindre la rotation de le tambour (3) et un état libre permettant de libérer le tambour (3) ; et
un mécanisme de retour (50) qui comprend un engrenage de retour (51) mis en rotation en réponse à la rotation de l'engrenage d'entraînement (7) permettant de faire repasser le mécanisme de commutation dans le tambour (3) de l'état libre à l'état de restriction par l'opération d'enroulement de la poignée (5),
dans lequel
le mécanisme de retour (50) comprend un premier engrenage (15A) et un second engrenage (15B) disposés avec faculté de rotation solidaire sur l'arbre d'entraînement (4), et
l'engrenage de retour (51) et l'engrenage d'oscillation (14) s'engrènent avec les premier et second engrenages (15A ; 15B), respectivement.

2. Moulinet de pêche selon la revendication 1, dans lequel
une portion d'engrènement de l'engrenage de retour (51) s'engrenant avec le premier engrenage (15A) est disposée sur un côté de l'engrenage d'entraînement (7) par rapport à l'arbre de tambour (3a), et
une portion d'engrènement de l'engrenage d'oscillation (14) s'engrenant avec le second engrenage (15B) est disposée sur un côté opposé à l'engrenage d'entraînement (7) par rapport à l'arbre de tambour (3a).

3. Moulinet de pêche selon la revendication 2, dans lequel au moins une portion d'une portion dentée du premier engrenage s'engrenant avec l'engrenage de retour (51) est disposée dans un évidement (7b) de l'engrenage d'entraînement (7).

4. Moulinet de pêche (1) comprenant :
un corps de moulinet (1) ;
un arbre de tambour (3a) supporté de façon mobile axialement dans le corps de moulinet (1) ;
un tambour (3) qui est disposé devant l'arbre de tambour (3a) et autour duquel une ligne de pêche est enroulée ;
un rotor (2) qui comprend une portion de guidage de ligne et tourne pour guider et enrouler la ligne de pêche autour du tambour (3) par la portion de guidage de ligne ;
un arbre d'entraînement (4) supporté de façon rotative par le corps de moulinet (1) ;
une poignée (5) fixée à l'arbre d'entraînement (4) ;
un engrenage d'entraînement (7) disposé sur l'arbre d'entraînement (4) ;
un engrenage à pignons (9) qui s'engrène avec l'engrenage d'entraînement (7), à travers lequel passe l'arbre de tambour (3a) et est solidaire en rotation du rotor (2) de sorte que le rotor (2) est mis en rotation en tournant la poignée (5) ;
un mécanisme d'oscillation (10) qui comprend un engrenage d'oscillation (14) mis en rotation en réponse à une rotation de l'engrenage d'entraînement (7) et est adapté pour convertir un mouvement rotatif de la poignée (5) en un mouvement alternatif de va-et-vient de l'arbre de tambour (3a) ;
un mécanisme de commutation comprenant un organe d'actionnement (31) opérationnel pour commuter le tambour (3) entre un état de restriction permettant de restreindre la rotation du tambour (3) et un état libre permettant de libérer le tambour (3) ; et
un mécanisme de retour (50) qui comprend un engrenage de retour (151) mis en rotation en réponse à la rotation de l'engrenage d'entraînement (7) permettant de faire repasser le mécanisme de commutation dans le tambour (3) de l'état libre à l'état de restriction par l'opération d'enroulement de la poignée (5),
**caractérisé en ce que**
le mécanisme de retour (50) comprend un engrenage (115) disposé avec faculté de rotation solidaire sur l'arbre d'entraînement (4), et
l'engrenage de retour (151) et l'engrenage d'oscillation (14) s'engrènent avec le même engrenage (115).
